(19) Europäisches Patentamt
European Patent Office
Office européen des brevets

(11) EP 3 237 523 B1

# (12) FASCICULE DE BREVET EUROPEEN

(45) Date de publication et mention de la délivrance du brevet:
**24.02.2021 Bulletin 2021/08**

(21) Numéro de dépôt: **15817251.0**

(22) Date de dépôt: **18.12.2015**

(51) Int Cl.:
***C08L 7/00*** *(2006.01)* ***C08L 9/00*** *(2006.01)*
***C08L 45/00*** *(2006.01)* ***B60C 1/00*** *(2006.01)*
***C08L 57/02*** *(2006.01)* *C08K 3/04* *(2006.01)*
*C08K 3/36* *(2006.01)*

(86) Numéro de dépôt international:
**PCT/EP2015/080421**

(87) Numéro de publication internationale:
**WO 2016/102344 (30.06.2016 Gazette 2016/26)**

## (54) COMPOSITION DE CAOUTCHOUC COMPRENANT UNE RÉSINE HYDROCARBONÉE SPÉCIFIQUE

KAUTSCHUKZUSAMMENSETZUNG MIT EINEM SPEZIFISCHEN KOHLENWASSERSTOFFHARZ

RUBBER COMPOSITION COMPRISING A SPECIFIC HYDROCARBON RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463078**

(43) Date de publication de la demande:
**01.11.2017 Bulletin 2017/44**

(73) Titulaire: **Compagnie Générale des Etablissements Michelin**
**63000 Clermont-Ferrand (FR)**

(72) Inventeurs:
- **CHATARD, Julien**
**63040 Clermont-Ferrand Cedex 9 (FR)**
- **DE GAUDEMARIS, Benoit**
**63040 Clermont-Ferrand Cedex 9 (FR)**
- **HUT, Alain**
**63040 Clermont-Ferrand Cedex 9 (FR)**
- **DIMIER, Francois**
**63040 Clermont. Ferrand Cedex 9 (FR)**
- **HELLOT, Fabien**
**63040 Clermont-Ferrand Cedex 9 (FR)**

(74) Mandataire: **Sidhu, Alban**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-94/01295** **WO-A1-2012/050658**
**FR-A1- 2 955 588**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention est relative aux compositions, notamment pour pneumatiques et plus particulièrement aux compositions comprenant une résine hydrocarbonée spécifique pour améliorer le collant de la composition avant cuisson.

La capacité des compositions de caoutchouc d'être collantes avant cuisson est une propriété indispensable à la confection de pneumatique. En effet, pour confectionner les pneumatiques, il est nécessaire de pouvoir appliquer les différentes couches du pneumatique les unes sur les autres et que ces couches adhèrent les unes aux autres, avant la cuisson du pneumatique, cuisson qui associera par la réticulation les couches les unes aux autres. Cette propriété de collant de la composition avant cuisson, est également appelée « collant à cru » ou « tack » ou « green tack ».

Les développements récents de pneumatiques à faible résistance au roulement ont amené les industriels des pneumatiques à modifier substantiellement les compositions de caoutchouc de leurs pneumatiques. Ce développement de mélanges à basse résistance au roulement s'accompagne en général d'une diminution du collant à cru. En effet, les résines tackifiantes utilisées pour augmenter le collant à cru s'accompagnent en général d'une augmentation de l'hystérèse. L'autre solution d'augmentation du collant à cru, par solvant d'avivage, présente le défaut de libérer des composés organiques volatils.

A présent, les Demanderesses ont montré qu'une composition particulière comprenant une résine hydrocarbonée spécifique permet d'avoir un très bon collant à cru et une faible résistance au roulement.

L'invention concerne donc une composition de caoutchouc à base d'au moins un élastomère diénique, une charge renforçante, un système de réticulation et une résine hydrocarbonée, ladite résine hydrocarbonée présentant une masse moléculaire moyenne en nombre (Mn) comprise entre 700 et 1000 g/mol, une masse moléculaire moyenne Mz comprise dans un domaine allant de 6000 à 8000 g/mol et un indice de polymolécularité (Ip) supérieur à 2,4.

Préférentiellement, l'invention concerne une composition telle que définie ci-dessus, dans laquelle ledit élastomère diénique est choisi dans le groupe constitué par les élastomères diéniques essentiellement insaturés. Préférentiellement, ledit élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. Plus préférentiellement, l'élastomère diénique majoritaire est choisi dans le groupe constitué par les polybutadiènes, les copolymères de butadiène et de styrène, et le caoutchouc naturel.

Préférentiellement également, l'invention concerne une composition telle que définie ci-dessus, dans laquelle la charge renforçante est choisie dans le groupe constitué par les silices, les noirs de carbone et les mélanges de ces derniers. Plus préférentiellement, le taux de charge renforçante est compris dans un domaine allant de 5 à 200 pce, de préférence de 40 à 160 pce.

De préférence, l'invention concerne une composition telle que définie ci-dessus, dans laquelle le taux de ladite résine hydrocarbonée est compris dans un domaine allant de 1 à 15 pce, de préférence de 2 à 12 pce. Plus préférentiellement, le taux de ladite résine hydrocarbonée est compris dans un domaine allant de 3 à 10 pce, de préférence de 3 à 8 pce.

De manière préférentielle, l'invention concerne une composition telle que définie ci-dessus, dans laquelle ladite résine hydrocarbonée présente une Mn comprise entre 800 et 1000 g/mol.

De préférence également, l'invention concerne une composition telle que définie ci-dessus, dans laquelle ladite résine hydrocarbonée présente un Ip compris dans un domaine allant de 2,4 à 2,8.

Préférentiellement, l'invention concerne une composition telle que définie ci-dessus, dans laquelle la résine est choisie dans le groupe constitué par les résines hydrocarbonées aliphatiques et les mélanges de ces dernières.

Selon une variante préférentielle, l'invention concerne une composition telle que définie ci-dessus comprenant en outre un système plastifiant. De préférence, le système plastifiant comprend une résine hydrocarbonée de Tg supérieure à 20°C et/ou une huile plastifiante.

L'invention concerne également un pneumatique comprenant une composition telle que définie ci-dessus.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition

Les compositions de caoutchouc selon l'invention sont à base d'au moins un élastomère diénique, une charge renforçante, un système de réticulation et une résine hydrocarbonée spécifique, ladite résine hydrocarbonée présentant une masse moléculaire moyenne en nombre (Mn) comprise entre 700 et 1000 g/mol, une masse moléculaire moyenne Mz supérieure à 6000 g/mol et un indice de polymolécularité (Ip) supérieur à 2,4.

Par l'expression «composition à base de» il faut entendre une composition comportant le mélange et/ou le produit de réaction in situ des différents constituants de base utilisés, certains de ces constituants pouvant réagir et/ou

étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

I-1 Elastomère diénique

Les compositions peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:

(a) tout homopolymère obtenu par polymérisation d'un monomère diène conjugué ayant de 4 à 12 atomes de carbone;

(b) tout copolymère obtenu par copolymérisation d'un ou plusieurs diènes conjugués entre eux ou avec un ou plusieurs composés vinyle aromatique ayant de 8 à 20 atomes de carbone;

(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Par fonction on entend ici préférentiellement un groupement chimique interactif avec la charge renforçante de la composition.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR).

Ainsi, l'invention concerne de préférence des compositions dans lesquelles l'élastomère ledit élastomère diénique est choisi dans le groupe constitué par les élastomères diéniques essentiellement insaturés, et notamment dans le groupe constitué par les polybutadiènes, les polyisoprènes de synthèse, le caoutchouc naturel, les copolymères de butadiène, les copolymères d'isoprène et les mélanges de ces élastomères. De préférence, l'élastomère diénique majoritaire est choisi dans le groupe constitué par les polybutadiènes, les copolymères de butadiène et de styrène, et le caoutchouc naturel.

I-2 Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m2/g, plus préférentiellement comprise entre 60 et 300 m2/g.

Ces compositions peuvent optionnellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sx - A - Z ,

dans laquelle:

- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le

propylène) ;

- Z répond à l'une des formules ci-après:

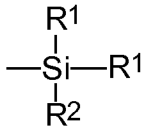 ; 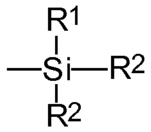 ; 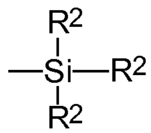 ,

dans lesquelles:

  - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).

  - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R2 = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 1 et 15 pce, plus préférentiellement entre 3 et 14 pce.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

Pour les besoins de l'invention, le taux de charge renforçante totale (noir de carbone et/ou charge inorganique renforçante telle que silice) est de 5 à 200 pce, plus préférentiellement de 40 à 160 pce. En dessous de 5 pce de charge, la composition pourrait ne pas être suffisamment renforcée tandis qu'au-dessus de 200 pce de charge, la composition pourrait être moins performante en résistance au roulement.

I-3 Système de réticulation

Dans la composition de l'invention, on peut utiliser tout type de système de réticulation connu de l'homme du métier pour les compositions de caoutchouc.

De préférence, le système de réticulation est un système de vulcanisation, c'est-à-dire à base de soufre (ou d'un agent donneur de soufre) et d'un accélérateur primaire de vulcanisation. A ce système de vulcanisation de base peuvent venir s'ajouter, incorporés au cours de la première phase non-productive et/ou au cours de la phase productive

telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

I-4 Résine hydrocarbonée spécifique

La composition selon l'invention comporte une résinbe hydrocarbonée spécifique. Cette résine hydrocarbonée présente une masse moléculaire moyenne en nombre (Mn) comprise entre 700 et 1000 g/mol, une masse moléculaire moyenne Mz supérieure à 6000 g/mol et un indice de polymolécularité (Ip) supérieur à 2,4. Les Mn, Mz et Ip sont mesurés par la technique de la chromatographie d'exclusion stérique (SEC), selon les méthodes définies plus bas.

De manière bien connue de l'homme du métier, les résines hydrocarbonées sont préparées par polymérisation. La fabrication de ces résines est notamment décrite dans « Hydrocarbon Resin » de R. Mildenberg, M. Zander, G. Collin et notamment au chapitre 3. Cette fabrication a lieu en quatre étapes, de sélection et prétraitement des feedstocks (lavage, distillation), de polymérisation des feedstocks (par voie cationique ou thermique), de neutralisation et de séparation de la résine, qui peut être faite par distillation ou stripping. Il est décrit que les paramètres de synthèse pouvant impacter les caractéristiques de la résine sont entre autres, la nature des constituants du feedstock qui est polymérisé, le type de procédé de polymérisation (Batch ou continu), le temps de réaction de polymérisation, la quantité de réactif d'initiation et les conditions de séparation de la résine.

Par exemple, lors de l'étape de séparation, la résine est séparée du feedstock non réagi, constitué de molécules de faible masse. Classiquement cette séparation est réalisée par distillation sous vide. La température et la pression permettent donc d'ajuster la masse moléculaire minimum de la résine. Ainsi cette étape permet de modifier la distribution de masse moléculaire de la résine. Il est ainsi connu pour l'homme de l'art, que des ajustements de paramètres de fabrication permettent d'obtenir des caractéristiques diverses pour les résines préparées.

Dans le commerce également, il existe de nombreuses résines hydrocarbonées disponibles. Ces résines peuvent présenter des caractéristiques, notamment de Mn, Mz et Ip qui diffèrent selon les fournisseurs, et parfois selon le lot pour une même dénomination commerciale. Ainsi, la mesure des paramètres spécifiques des résines, préparées ou commercialement disponibles, permet de choisir la résine pour l'invention, cette dernière devant présenter les propriétés spécifiques de Mn, Mz et Ip décrites dans la présente demande.

La macrostructure (Mw, Mn, Ip et Mz) de la résine hydrocarbonée est déterminée par chromatographie d'exclusion stérique (SEC) sur la base des normes ISO 16014 (*Determination of average molecular mass and molecular mass distribution of polymers using size exclusion chromatography*), ASTM D5296 (*Molecular Weight Averages and molecular weight distribution of polystyrene by High performance size exclusion chromatography*), et DIN 55672 (chromatographie d'exclusion stérique).

Pour ces mesures, l'échantillon de résine est solubilisé dans du tetrahydrofurane non antioxydé jusqu'à une concentration de 1,5 g/l. La solution est filtrée avec un filtre téflon de porosité de 0,45 $\mu$m, en utilisant par exemple une seringue à usage unique montée d'un filtre. Un volume de 100 $\mu$l est injecté à travers un jeu de colonnes de chromatographie d'exclusion stérique. La phase mobile est éluée avec un débit de 1 ml/min. Les colonnes sont thermostatées dans un four à 35°C. La détection est assurée par un réfractomètre thermostaté à 35°C. La phase stationnaire des colonnes est à base d'un gel de polystyrène divinylbenzène à porosité maîtrisée. Les chaînes polymères sont séparées selon la taille qu'elles occupent quand elles sont solubilisées dans le solvant: plus elles occupent un volume important, moins les pores des colonnes leur sont accessibles et plus leur temps d'élution est faible.

Une courbe d'étalonnage de Moore reliant le logarithme de la masse molaire (logM) au temps d'élution (te) est préalablement réalisée avec des étalons polystyrène, et modélisée par un polynome d'ordre 3 : Log (masse molaire de polystyrène) = a + b te + c te2 + d te3.

Pour la courbe d'étalonnage on utilise des étalons de polystyrène à distributions moléculaires étroites (indice de polymolécularité, Ip, inférieur ou égal à 1,1). Le domaine de masses molaires de ces étalons s'étend de 160 à environ 70 000 g/mol. Ces étalons peuvent être rassemblés par « familles » de 4 ou 5 étalons ayant un incrément d'environ 0,55

en log de M entre chaque.

On peut utiliser des kits étalons certifiés (ISO 13885 et DIN 55672) comme par exemple les kits de vials de la société PSS (polymer standard service, référence PSS-pskitr1l-3), ainsi qu'un PS étalon supplémentaire de Mp = 162 g/mol (Interchim, référence 178952). Ces kits se présentent sous la forme de 3 vials contenant chacun une famille de polystyrène étalons dans des quantités adaptées :

- Vial noir : Mp = 1 220, 4 850, 15 500 et 67 500 g/mol.
- Vial bleu : Mp = 376, 3 470, 10 400, 46 000 g/mol.
- Vial jaune : Mp = 266, 1 920, 7 200, 28 000 g/mol.
- PS162 : Mp = 162 g/mol.

Les masses molaires moyennes en nombre (Mn), en masse (Mw), la Mz, et la polydispersité de la résine analysée sont calculées à partir de cette courbe d'étalonnage. C'est pourquoi, on parle de masses molaires relatives à un étalonnage polystyrène.

Pour le calcul des masses moyennes et de l'Ip, on définit sur le chromatogramme correspondant à l'injection de l'échantillon les bornes d'intégration de l'élution du produit. On « découpe » le signal réfractométrique défini entre les 2 bornes d'intégration toutes les secondes. On relève pour chacune des "découpes élémentaires", le temps d'élution ti et l'aire du signal du détecteur Ai.

On rappelle ici que : Ip = Mw/Mn avec Mw masse moléculaire moyenne en poids, et Mn masse moléculaire en nombre. On rappelle également que les masses Mw, Mn et Mz sont des masses moyennes calculées d'après les formules ci-dessous :

$$MZ = \frac{\sum Ai * Mi^2}{\sum Ai * Mi}$$

$$Mn = \frac{\sum Ai}{\sum \frac{Ai}{Mi}}$$

$$Mw = \frac{\sum Ai * Mi}{\sum Ai}$$

dans lesquelles Ai est l'amplitude du signal du détecteur refractométrique correspondant à la masse Mi et au temps d'élution ti.

Le matériel utilisé pour la mesure de SEC est une chaîne de chromatographie en phase liquide par exemple la chaîne Alliance 2690 de WATERS comprenant une pompe, un dégazeur et un injecteur ; un réfractomètre différentiel (par exemple le réfractomètre 2410 de WATERS), un logiciel d'acquisition et de traitement des données, par exemple le logiciel EMPOWER de WATERS, un four à colonnes, par exemple le WATERS « columns Heater Module » et 4 colonnes montées en série dans l'ordre suivant :

| ***Numéro*** | ***Marque*** | ***Domaine de masses molaires (g/mol)*** | ***Longueur (mm)*** | ***Diamètre interne (mm)*** | ***Taille des particules (µm)*** | ***Désignation commerciale*** | ***Références (à titre indicatif)*** |
|---|---|---|---|---|---|---|---|
| Colonnes 1 et 2 | Polymer Laboratories | 200 - 400000 | 300 | 7,5 | 5 | MIXED-D | PL1110-6504 |
| Colonnes 3 et 4 | Polymer Laboratories | 200 - 30000 | 300 | 7,5 | 3 | MIXED-E | PL1110-6300 |

Les résines commerciales ci-dessous ont été analysées avec la méthode décrite ci-dessus pour déterminer leurs caractéristiques, le tableau 1 récapitule les résultats obtenus.

**Tableau 1**

| | Mn (g/mol) | Mz (g/mol) | Ip |
|---|---|---|---|
| Résine 1 (1) | 1830 | 7200 | 2,1 |
| Résine 2 (2) | 1344 | 8835 | 2,6 |
| Résine 3 (3) | 895 | 4228 | 2 |
| Résine 4 (4) | 586 | 5200 | 3 |
| Résine 5 (5) | 341 | 597 | 1,3 |
| Résine 6 (6) | 1370 | 7250 | 2,3 |
| Résine 7 (7) | 901 | 7076 | 2,6 |

(1) Résine 1 : « R 7578 P » de la société SI group
(2) Résine 2 : « Piccotac 1105-E » de la société Eastman
(3) Résine 3 : « HIKOREZ A-1100 » de la société Kolon
(4) Résine 4 : « Novares TD 120 » de la société Rutgers
(5) Résine 5 : « Novares TL 10 » de la société Rutgers
(6) Résine 6 : « Escorez 1102 type 1 » de la société Exxon
(7) Résine 7 : « Escorez 1102 type 2 » de la société Exxon

Le tableau 1, par l'analyse des résines du commerce, montre que seule la résine 7 satisfait aux critères de la résine utile aux besoins de l'invention, notamment en comparaison de la résine 6, qui un autre type de résine bien que portant la même référence commerciale de la même société.

De préférence, la résine présente une température de transition vitreuse, Tg, comprise dans un domaine allant de -50°Cà 100°C, plus préférentiellement de 40 à 60°C. La Tg est mesurée selon ASTM D3418 (1999).

De préférence, la résine présente un point de ramollissement compris dans un domaine allant de 0 à 160°C, de préférence de 90 à 110°C. Le point de ramollissement est mesuré selon la norme ISO 4625 (méthode "Ring and Ball").

De préférence, la résine présente une Mn comprise dans un domaine allant de 800 à 1000 g/mol.

De préférence, la résine présente une Mz comprise dans un domaine allant de 6000 à 8000 g/mol.

De préférence, la résine présente un Ip compris dans un domaine allant de 2,4 à 2,8.

La résine utile aux besoins de l'invention peut être choisie parmi les résines naturelles ou synthétiques. Parmi les résines synthétiques elle peut être préférentiellement choisie parmi les résines hydrocarbonées thermoplastiques aliphatiques, ou aromatiques ou encore du type aliphatique/ aromatique c'est-à-dire à base de monomères aliphatiques et/ou aromatiques.

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine utile aux besoins de l'invention est choisie dans le groupe constitué par les résines hydrocarbonées aliphatiques et les mélanges de ces dernières et notamment parmi les résines d'homopolymères ou copolymères de cyclopentadiène (en abrégé CPD) ou dicyclopentadiène (en abrégé DCPD), les résines d'homopolymères ou copolymères de coupe C5 et les mélanges de ces dernières.

Préférentiellement, le taux de résine est compris dans un domaine allant de 1 pce à 15 pce, préférentiellement de 2 à 12 pce, encore plus préférentiellement de 3 à 10 pce, en particulier de 3 à 8 pce. En effet, en dessous de 1 pce de la résine utile aux besoins de l'invention, la composition pourrait présenter des problèmes de collant et donc de processabilité industrielle, tandis qu'au-dessus de 15 pce la résine pourrait modifier les propriétés de rigidité et de température de transition vitreuse de la composition.

I-5 Autres additifs possibles

Les compositions de caoutchouc conformes à l'invention comportent optionnellement également tout ou partie

des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

La composition selon l'invention peut également comporter un système plastifiant. Ce système plastifiant peut être composé d'une résine hydrocarbonée de Tg supérieure à 20°C, en plus de la résine hydrocarbonée spécifique décrite précédemment, et/ou une huile plastifiante.

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

## II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la résine hydrocarbonée (et éventuellement les agents de couplage et/ou d'autres ingrédients à l'exception du système de réticulation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de réticulation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis pour pneumatiques. Ces produits peuvent ensuite être utilisés pour la fabrication de pneumatiques, selon les techniques connues de l'homme du métier, avec l'avantage de l'invention, à savoir un bon collant des couches les unes sur les autres avant cuisson du pneumatique.

La réticulation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

Les exemples qui suivent illustrent l'invention sans toutefois la limiter.

## III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

- Collant à cru (ou tack):

Le tack est la capacité d'un assemblage de mélanges non vulcanisés à résister à une sollicitation d'arrachement.

On utilise pour la mesure du collant à cru (tack) un dispositif de test est inspiré du probe tack tester (ASTM D2979-95). On utilise une machine de traction Instron comportant un mors métallique fixe et un mors métallique mobile. Une première éprouvette constituée d'un film de mélange de 3mm d'épaisseur est collée sur le mors fixe. Une deuxième éprouvette constituée d'un film de mélange de 3mm d'épaisseur est collée sur le mors mobile. Les films de mélange sont collés sur la surface des mors métalliques avec un adhésif double face (Tesafix® 4970).

Pour la préparation des éprouvettes de mélange, les films de mélange sont obtenus par calandrage à une épaisseur de 3 mm. Les éprouvettes sont découpées à l'aide d'un emporte-pièce de diamètre 1 cm.

Le principe de la mesure consiste à mettre en contact les deux films de mélange durant 5 secondes en appliquant une force de compression de 40 N. Après cette phase de contact, ils sont séparés par entraînement de la traverse de la machine de traction. La vitesse de déplacement de la traverse dans cette phase d'arrachement est de 1mm/s. Le déplacement de la traverse et la force sont mesurés en continu en fonction du temps durant les phases de contact et d'arrachement.

Le résultat de collant à cru est la mesure de la force maximum atteinte lors de l'arrachement.

Les résultats sont exprimés en base 100, c'est-à-dire qu'on affecte arbitrairement la valeur 100 au meilleur témoin, pour comparer ensuite le collant à cru des différentes solutions testées, plus la valeur est élevée, plus le collant à cru est fort.

- Propriétés dynamiques (après cuisson):

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, dans les conditions variables de température, notamment à 60°C, selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (ΔG*) entre les valeurs à 0,1% et à 50% de déformation (effet Payne). Pour la valeur de tan(δ)max à 60°C, plus la valeur est basse, plus la composition aura une hystérèse faible et donc un résistance au roulement faible. Les résultats sont exprimés en base 100, c'est-à-dire qu'on affecte arbitrairement la valeur 100 au meilleur témoin, pour comparer ensuite le tan(δ)max à 60°C (c'est-à-dire l'hystérèse - et donc la résistance au roulement) des différentes solutions testées.

III-3 Exemples

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Les exemples présentés dans le tableau 2 ont pour objet de comparer les différentes propriétés de caoutchouterie de compositions témoins (C1 à C7) à une composition C8 conforme à l'invention. Les propriétés mesurées avant et après cuisson sont présentées au tableau 3.

Tableau 2

| | C1 | C2 | C3 | C4 | C5 | C6 | C7 | C8 |
|---|---|---|---|---|---|---|---|---|
| NR (1) | 25 | 25 | 25 | 25 | 25 | 25 | 25 | 25 |
| BR (2) | 75 | 75 | 75 | 75 | 75 | 75 | 75 | 75 |
| Noir de carbone (3) | 65 | 65 | 65 | 65 | 65 | 65 | 65 | 65 |
| Résine 1 (4) | - | 5 | - | - | - | - | - | - |
| Résine 2 (5) | - | - | 5 | - | - | - | - | - |
| Résine 3 (6) | - | - | - | 5 | - | - | - | - |
| Résine 4 (7) | - | - | - | - | 5 | - | - | - |

(suite)

| | C1 | C2 | C3 | C4 | C5 | C6 | C7 | C8 |
|---|---|---|---|---|---|---|---|---|
| Résine 5 (8) | - | - | - | - | - | 5 | - | - |
| Résine 6 (9) | - | - | - | - | - | - | 5 | - |
| Résine 7 (10) | - | - | - | - | - | - | - | 5 |
| Antioxidant (11) | 2,5 | 2,5 | 2,5 | 2,5 | 2,5 | 2,5 | 2,5 | 2,5 |
| Acide stéarique (12) | 3 | 3 | 3 | 3 | 3 | 3 | 3 | 3 |
| ZnO (13) | 4 | 4 | 4 | 4 | 4 | 4 | 4 | 4 |
| Accélérateur (14) | 1,6 | 1,6 | 1,6 | 1,6 | 1,6 | 1,6 | 1,6 | 1,6 |
| Soufre soluble | 0,8 | 0,8 | 0,8 | 0,8 | 0,8 | 0,8 | 0,8 | 0,8 |

(1) NR : caoutchouc naturel
(2) BR : polybutadiène
(3) Noir de carbone Grade ASTM N375(société Cabot)
(4) Résine 1 : « R 7578 P » de la société SI group
(5) Résine 2 : « Piccotac 1105-E » de la société Eastman
(6) Résine 3 : « HIKOREZ A-1100 » de la société Kolon
(7) Résine 4 : « Novares TD 120 » de la société Rutgers
(8) Résine 5 : « Novares TL 10 » de la société Rutgers
(9) Résine 6 : « Escorez 1102 type 1» de la société Exxon
(10) Résine 7 : « Escorez 1102 type 2» de la société Exxon
(11) N-(1,3-diméthylbutyl)-N'-phényl-p-phénylènediamine (Santoflex 6-PPD) de la société Flexsys et Cire anti-ozone
(12) Stéarine « Pristerene 4931 » de la société Uniqema
(13) Oxyde de zinc de grade industriel - société Umicore
(14) N-cyclohexyl-2-benzothiazol-sulfénamide (« Santocure CBS » de la société Flexsys)

Tableau 3

| | C1 | C2 | C3 | C4 | C5 | C6 | C7 | C8 |
|---|---|---|---|---|---|---|---|---|
| Collant à cru (base 100) | 32 | 100 | 61 | 48 | 40 | 39 | 63 | 87 |
| Tan(delta)max à 60°C (base 100) | 100 | 118 | 98 | 100 | 114 | 101 | 98 | 101 |

Par rapport aux compositions témoins, on note que la composition C8, conforme à l'invention, présente un compromis collant à cru / hystérèse amélioré par rapport à tous les témoins et notamment par rapport au témoin C2, qui, s'il présente une meilleure performance de collant à cru que la composition C8 conforme à l'invention, présente également une plus grande hystérèse, pénalisant la résistance au roulement. On peut noter aussi la grande différence entre les compositions C7 et C8, indiquant que selon la version de fabrication d'une même résine, ici « Escorez 1102 », les propriétés peuvent varier de manière notable, selon les caractéristiques précises de Mn, Mz et Ip de la résine. Ici, la composition témoin C7 présente une hystérèse comparable à la composition conforme à l'invention mais un collant à cru nettement moins bon. La composition C8 de l'invention possède donc le meilleur compromis de performances entre le collant à cru et la résistance au roulement, avec un niveau d'hystérèse aussi faible que le témoin C1 sans résine, et un niveau de collant à cru élevé.

## Revendications

1. Composition de caoutchouc à base d'au moins un élastomère diénique, une charge renforçante, un système de réticulation et une résine hydrocarbonée, ladite résine hydrocarbonée présentant une masse moléculaire moyenne en nombre (Mn) comprise entre 700 et 1000 g/mol, une masse moléculaire moyenne Mz comprise dans un domaine allant de 6000 à 8000 g/mol et un indice de polymolécularité (Ip) supérieur à 2,4.

2. Composition selon la revendication 1, dans laquelle ledit élastomère diénique est choisi dans le groupe constitué

par les élastomères diéniques essentiellement insaturés.

3. Composition selon l'une quelconque des revendications précédentes dans laquelle ledit élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

4. Composition selon l'une quelconque des revendications précédentes dans laquelle l'élastomère diénique majoritaire est choisi dans le groupe constitué par les polybutadiènes, les copolymères de butadiène et de styrène, et le caoutchouc naturel.

5. Composition selon l'une quelconque des revendications précédentes dans laquelle la charge renforçante est choisie dans le groupe constitué par les silices, les noirs de carbone et les mélanges de ces derniers.

6. Composition selon l'une quelconque des revendications précédentes dans laquelle le taux de charge renforçante est compris dans un domaine allant de 5 à 200 pce, de préférence de 40 à 160 pce.

7. Composition selon l'une quelconque des revendications précédentes dans laquelle le taux de ladite résine hydrocarbonée est compris dans un domaine allant de 1 à 15 pce, de préférence de 2 à 12 pce.

8. Composition selon la revendication 7 dans laquelle le taux de ladite résine hydrocarbonée est compris dans un domaine allant de 3 à 10 pce, de préférence de 3 à 8 pce.

9. Composition selon l'une quelconque des revendications précédentes dans laquelle ladite résine hydrocarbonée présente une Mn comprise entre 800 et 1000 g/mol.

10. Composition selon l'une quelconque des revendications précédentes dans laquelle ladite résine hydrocarbonée présente un Ip compris dans un domaine allant de 2,4 à 2,8.

11. Composition selon l'une quelconque des revendications précédentes dans laquelle la résine est choisie dans le groupe constitué par les résines hydrocarbonées aliphatiques et les mélanges de ces dernières.

12. Composition selon l'une quelconque des revendications précédentes comprenant en outre un système plastifiant.

13. Composition selon la revendication précédente dans laquelle le système plastifiant comprend une résine hydrocarbonée de Tg supérieure à 20°C et/ou une huile plastifiante.

14. Pneumatique comprenant une composition selon l'une quelconque des revendications 1 à 13.

**Patentansprüche**

1. Gummizusammensetzung auf Basis von wenigstens einem Dienelastomer, einem verstärkenden Füllstoff, einem Vernetzungssystem und einem Kohlenwasserstoffharz, wobei das Kohlenwasserstoffharz ein Zahlenmittel der Molekülmasse (Mn) zwischen 700 und 1000 g/mol, eine mittlere Molekülmasse Mz in einem Bereich von 6000 bis 8000 g/mol und einen Polymolekularitätsindex (Ip) größer als 2,4 aufweist.

2. Zusammensetzung nach Anspruch 1, wobei das Dienelastomer aus der Gruppe gewählt ist, die von im Wesentlichen ungesättigten Dienelastomeren gebildet ist.

3. Zusammensetzung nach einem der vorhergehenden Ansprüche, wobei das Dienelastomer aus der Gruppe gewählt ist, die von Polybutadienen, Synthese-Polyisoprenen, Naturkautschuk, Butadien-Copolymeren, Isopren-Copolymeren und Gemischen dieser Elastomere gebildet ist.

4. Zusammensetzung nach einem der vorhergehenden Ansprüche, wobei das überwiegende Dienelastomer aus der Gruppe gewählt ist, die von Polybutadienen, Butadien- und Styrol-Copolymeren und Naturkautschuk gebildet ist.

5. Zusammensetzung nach einem der vorhergehenden Ansprüche, wobei der verstärkende Füllstoff aus der Gruppe gewählt ist, die von Siliziumdioxiden, Rußen und Gemischen letzterer gebildet ist.

6. Zusammensetzung nach einem der vorhergehenden Ansprüche, wobei der Gehalt des verstärkenden Füllstoffs in einem Bereich von 5 bis 200 pce, vorzugsweise von 40 bis 160 pce liegt.

7. Zusammensetzung nach einem der vorhergehenden Ansprüche, wobei der Gehalt des Kohlenwasserstoffharzes in einem Bereich von 1 bis 15 pce, vorzugsweise von 2 bis 12 pce liegt.

8. Zusammensetzung nach Anspruch 7, wobei der Gehalt des Kohlenwasserstoffharzes in einem Bereich von 3 bis 10 pce, vorzugsweise von 3 bis 8 pce liegt.

9. Zusammensetzung nach einem der vorhergehenden Ansprüche, wobei das Kohlenwasserstoffharz ein Mn zwischen 800 bis 1000 g/mol aufweist.

10. Zusammensetzung nach einem der vorhergehenden Ansprüche, wobei das Kohlenwasserstoffharz einen Ip in einem Bereich von 2,4 bis 2,8 aufweist.

11. Zusammensetzung nach einem der vorhergehenden Ansprüche, wobei das Harz aus der Gruppe gewählt ist, die von aliphatischen Kohlenwasserstoffharzen und Gemischen letzterer gebildet ist.

12. Zusammensetzung nach einem der vorhergehenden Ansprüche, ferner umfassend ein Weichmachersystem.

13. Zusammensetzung nach dem vorhergehenden Anspruch, wobei das Weichmachersystem ein Kohlenwasserstoffharz mit Tg größer als 20°C und/oder ein Weichmacheröl umfasst.

14. Reifen umfassend eine Zusammensetzung nach einem der Ansprüche 1 bis 13.

**Claims**

1. Rubber composition based on at least one diene elastomer, a reinforcing filler, a crosslinking system and a hydrocarbon-based resin, said hydrocarbon-based resin having a number-average molecular weight (Mn) of between 700 and 1000 g/mol, an average molecular weight Mz within a range extending from 6000 to 8000 g/mol and a polydispersity index (PI) of greater than 2.4.

2. Composition according to Claim 1, in which said diene elastomer is selected from the group consisting of essentially unsaturated diene elastomers.

3. Composition according to any one of the preceding claims, in which said diene elastomer is selected from the group consisting of polybutadienes, synthetic polyisoprenes, natural rubber, butadiene copolymers, isoprene copolymers and mixtures of these elastomers.

4. Composition according to any one of the preceding claims, in which the predominant diene elastomer is selected from the group consisting of polybutadienes, copolymers of butadiene and styrene, and natural rubber.

5. Composition according to any one of the preceding claims, in which the reinforcing filler is selected from the group consisting of silicas, carbon blacks and the mixtures thereof.

6. Composition according to any one of the preceding claims, in which the content of reinforcing filler is within a range extending from 5 to 200 phr and preferably from 40 to 160 phr.

7. Composition according to any one of the preceding claims, in which the content of said hydrocarbon-based resin is within a range extending from 1 to 15 phr and preferably from 2 to 12 phr.

8. Composition according to Claim 7, in which the content of said hydrocarbon-based resin is within a range extending from 3 to 10 phr and preferably from 3 to 8 phr.

9. Composition according to any one of the preceding claims, in which said hydrocarbon-based resin has an Mn of between 800 and 1000 g/mol.

**10.** Composition according to any one of the preceding claims, in which said hydrocarbon-based resin has a PI within a range extending from 2.4 to 2.8.

**11.** Composition according to any one of the preceding claims, in which the resin is selected from the group consisting of aliphatic hydrocarbon-based resins and mixtures thereof.

**12.** Composition according to any one of the preceding claims, additionally comprising a plasticizing system.

**13.** Composition according to the preceding claim, in which the plasticizing system comprises a hydrocarbon-based resin with a Tg of greater than 20°C and/or a plasticizing oil.

**14.** Tyre comprising a composition according to any one of Claims 1 to 13.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9736724 A
- WO 9916600 A
- WO 2006069792 A
- WO 2006069793 A
- WO 2008003434 A
- WO 2008003435 A
- EP 0735088 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- EP 0501227 A
- EP 0810258 A
- WO 0005300 A
- WO 0005301 A